# EUROPEAN PATENT APPLICATION

(11) **EP 4 763 566 A1**
(43) Date of publication of application: **24.06.2026**
(21) Application number: 24861849.8
(22) Date of filing: 23.08.2024
(51) Int. Cl.: B60K 11/06

(54) **ALL-TERRAIN VEHICLE**

(30) Priority: 04.09.2023 CN 202311130855
(71) Applicant: Zhejiang CFMOTO Power Co., Ltd., Hangzhou, Zhejiang 311199 (CN)
(72) Inventor: AI, Xin, Hangzhou, Zhejiang 311199 (CN); DING, Dong, Hangzhou, Zhejiang 311199 (CN); LIN, Chao, Hangzhou, Zhejiang 311199 (CN); HAN, Wei, Hangzhou, Zhejiang 311199 (CN); LI, Jia, Hangzhou, Zhejiang 311199 (CN); ZHU, Guangbing, Hangzhou, Zhejiang 311199 (CN); ZHAO, Zhe, Hangzhou, Zhejiang 311199 (CN)
(74) Representative: Sun, Yiming
(86) International application number: PCT/CN2024/114253
(87) International publication number: WO 2025/051005

(57) **Abstract**

The present application discloses an all-terrain vehicle. The all-terrain vehicle includes a frame, a prime mover system, a transmission system, travel members, a cooling system, and a vehicle door assembly. The frame includes a rear frame. The cooling system is supported by the rear frame and includes a cooling module at least partially connected to the prime mover system and an air-guiding mechanism for guiding air to the cooling module. The air-guiding mechanism includes an air-guiding housing and air intake members positioned on two sides of the air-guiding housing. The air-guiding housing defines an air chamber, and the air intake members are in fluid communication with the air chamber. The cooling module is at least partially positioned in the air chamber. A transverse plane is defined as being perpendicular to the length direction of the all-terrain vehicle. A projection of the air intake member projected along the length direction of the all-terrain vehicle on the transverse plane is defined as an air intake member projection, and a projection of the vehicle door assembly projected along the length direction of the all-terrain vehicle on the transverse plane is defined as a vehicle door projection. The vehicle door projection is positioned between two air intake member projections. The air intake volume of the all-terrain vehicle can be increased to enhance the cooling effect by the above arrangement.

## Description

### RELATED APPLICATION INFORMATION

The present application claims the benefit of priority to Chinese Patent Application No. 202311130855.1, entitled "All-terrain vehicle", filed with the Chinese Patent Office on September 4, 2023. The entire contents of the above-referenced application are incorporated herein by reference.

### FIELD OF THE DISCLOSURE

The present application relates to the field of vehicles, and particularly to an all-terrain vehicle.

### BACKGROUND OF THE DISCLOSURE

All-terrain vehicles, a type of vehicle with strong off-road performance and enjoyment, are increasingly favored by consumers. Two types of all-terrain vehicles, SSV (Side by Side Vehicle) and UTV (Utility Vehicle), mainly refer to vehicles with semi-enclosed cockpit.

The cooling system is an important part of all-terrain vehicles, and cooling efficiency thereof has a significant impact on the power system of all-terrain vehicles. However, the cooling efficiency of the cooling system in the existing all-terrain vehicles is relatively low, making it difficult to meet the cooling requirements of all-terrain vehicles having large displacement.

### SUMMARY OF THE INVENTION

In order to address the shortcomings in the background, the purpose of the present invention is to provide an all-terrain vehicle with a cooling system that has high cooling efficiency.

To achieve the above objectives, the present application adopts the following technical solution:
An all-terrain vehicle includes a frame, a vehicle body cover, a prime mover system, a transmission system, travel members, a cooling system, and a vehicle door assembly. The frame includes a rear frame arranged on the rear of the frame. The vehicle body cover is arranged on the frame. The prime mover system is supported by the frame. The transmission system is at least partially connected to the prime mover system. The travel members are at least partially connected to the transmission system. The cooling system is at least partially connected to the prime mover system. The vehicle door assembly is connected to the frame. The cooling system is supported by the rear frame and includes a cooling module at least partially connected to the prime mover system and an air-guiding mechanism for guiding air to the cooling module. The air-guiding mechanism includes an air-guiding housing and air intake members positioned on two sides of the air-guiding housing. The air-guiding housing defines an air chamber, and the air intake members are in fluid communication with the air chamber. The cooling module is at least partially positioned in the air chamber. A transverse plane is defined as being perpendicular to the length direction of the all-terrain vehicle. A projection of the air intake member projected along the length direction of the all-terrain vehicle on the transverse plane is defined as an air intake member projection, and a projection of the vehicle door assembly projected along the length direction of the all-terrain vehicle on the transverse plane is defined as a vehicle door projection. The vehicle door projection is positioned between two air intake member projections.

An all-terrain vehicle includes a frame, a vehicle body cover, a prime mover system, a transmission system, travel members, and a cooling system. The frame includes a rear frame arranged on the rear of the frame. The vehicle body cover is arranged on the frame. The prime mover system is arranged on the rear frame, and the rear frame supports the prime mover system. The transmission system is at least partially connected to the prime mover system. The travel members are arranged under the frame and is at least partially connected to the transmission system. The cooling system is at least partially connected to the prime mover system. The cooling system is arranged on the rear frame and includes a cooling module at least partially connected to the prime mover system and an air-guiding mechanism for guiding air to the cooling module. The air-guiding mechanism extends substantially along the width direction of the all-terrain vehicle. The air-guiding mechanism includes an air-guiding housing and an air intake member arranged at least one end of the air-guiding housing. An air chamber is defined inside the air-guiding housing, and the air intake member is in fluid communication with the air chamber. The cooling module is at least partially positioned in the air chamber.

An all-terrain vehicle includes a frame, a vehicle body cover, a prime mover system, a transmission system, travel members, a cooling system, a vehicle door assembly. The frame includes a rear frame arranged on the rear of the frame. The vehicle body cover is arranged on the frame. The prime mover system is supported by the frame. The transmission system is at least partially connected to the prime mover system. The travel members are at least partially connected to the transmission system. The cooling system is at least partially connected to the prime mover system. The vehicle door assembly is connected to the frame. The cooling system is supported by the rear frame and includes a cooling module at least partially connected to the prime mover system and an air-guiding mechanism for guiding air to the cooling module. The air-guiding mechanism includes an air-guiding housing and air intake members positioned on two sides of the air-guiding housing. A transverse plane is defined as being perpendicular to the length direction of the all-terrain vehicle. A projection of the air intake member projected along the length direction of the all-terrain vehicle on the transverse plane is defined as an air intake member projection, and a projection of the vehicle door assembly projected along the length direction of the all-terrain vehicle on the transverse plane is defined as a vehicle door projection. The vehicle door projection is positioned between two air intake member projections.

### BRIEF DESCRIPTION OF THE DRAWINGS

FIG. 1 is a perspective view of an all-terrain vehicle according to an embodiment of the present application;
FIG. 2 is a perspective view of a prime mover system and a transmission system according to the embodiment of the present application;
FIG. 3 is a front view of the connection structure between the frame and a rear suspension according to the embodiment of the present application;
FIG. 4 is a perspective view of the connection structure between the transmission system and the frame according to the embodiment of the present application;
FIG. 5 is an enlarged view of part A in FIG. 4 according to the embodiment of the present application;
FIG. 6 is a view of a front axle assembly according to the embodiment of the present application;
FIG. 7 is a perspective view of a power train according to the embodiment of the present application;
FIG. 8 is a side view of the power train according to the embodiment of the present application;
FIG. 9 is a top view of the connection structure between the hanging members and the power train according to the embodiment of the present application;
FIG. 10 is a perspective view of a fuel tank according to the embodiment of the present application;
FIG. 11 is a view of a fuel tank structure in an embodiment of the present application;
FIG. 12 is a perspective view of another arrangement between the fuel tank and frame according to another embodiment of the present application;
FIG. 13 is a perspective view of the cooling module and the frame according to an embodiment of the present application;
FIG. 14 is a side view of the cooling module according to an embodiment of the present application;
FIG. 15 is a top view of the cooling module according to an embodiment of the present application;
FIG. 16 shows the position of the cooling module according to an embodiment of the present application;
FIG. 17 is a top view of a guiding mechanism according to an embodiment of the present application;
FIG. 18 is a side view of the guiding mechanism according to the embodiment of the present application;
FIG. 19 is a front view of the guiding mechanism according to the embodiment of the present application;
FIG. 20 is a top view of a fixing bracket of the cooling module according to an embodiment of the present application;
FIG. 21 shows the structure of the coolant reservoir according to an embodiment of the present application;

### DETAILED DESCRIPTION

In order to enable personnel in this field to better understand the present invention, the technical solutions in the specific embodiments of the present invention will be clearly and completely described below in conjunction with the accompanying drawings.

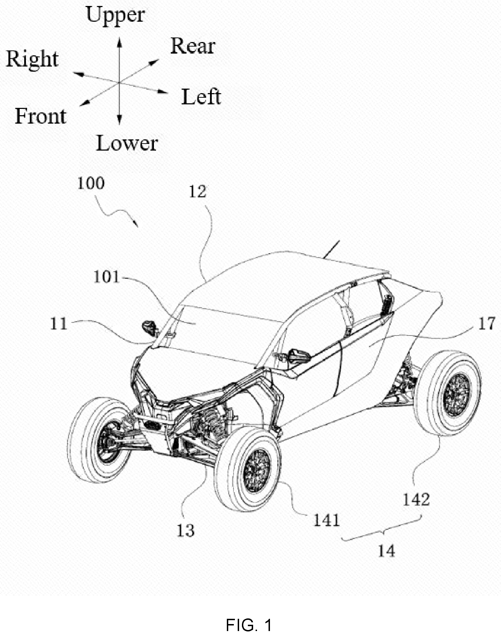

The present application provides an all-terrain vehicle 100 as shown in FIG. 1, which includes a frame 11, a vehicle body cover 12, a suspension system 13, and a travel members 14. For better understanding of the present invention, orientations of "front", "rear", "left", "right", "up", and "down" are defined in FIG. 1.

In the description of the present application, it should be noted that the term "length direction" refers to a front-rear direction of the vehicle when a driver of the all-terrain vehicle 100 is in a driving state. The term "width direction" refers to a left-right direction of the vehicle when a driver of the all-terrain vehicle 100 is in a driving state. the term "height direction" refers to an up-down direction of the vehicle when a driver of the all-terrain vehicle 100 is in a driving state.

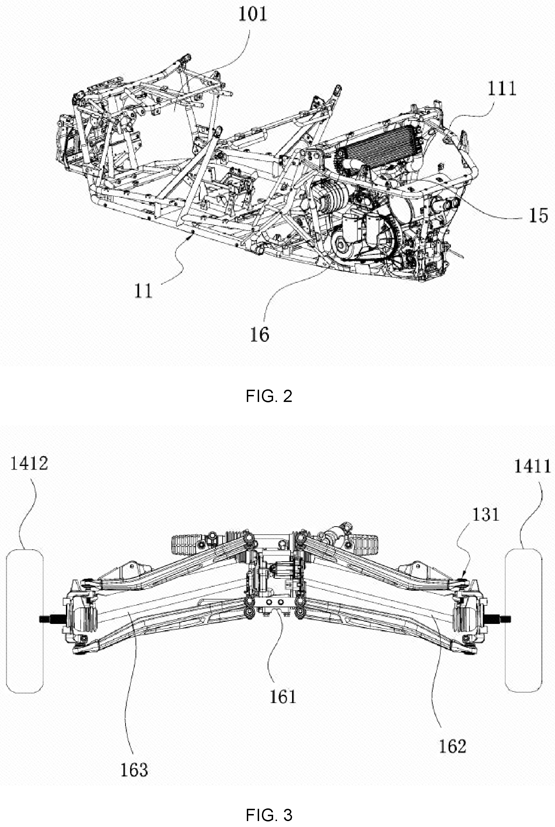

As shown in FIG. 1 and FIG. 2, as an embodiment, the all-terrain vehicle 100 further includes a prime mover system 15 and a transmission system 16. The frame 11 forms the main frame of the all-terrain vehicle 100. The frame 11 and the vehicle body cover 12 cooperatively defines a cockpit 101 for a driver and a passenger, and other systems and components are directly or indirectly connected to the frame 11. The vehicle body cover 12 is at least partially positioned on the outer side of the frame 11, and used to cover most of the frame 11. The suspension system 13 is connected to frame 11, and suspension system 13 is used to connect travel members 14 to frame 11. The prime mover system 15 is at least partially connected to frame 11 to provide driving force for all-terrain vehicle 100. The transmission system 16 is connected to the power system 15 in a transmission mode. The transmission system 16 receives the driving force output from the prime mover system 15 and transmits the driving force to the travel members 14. The travel members 14 are at least partially positioned under the frame 11, and directly or indirectly receives the driving force output by the transmission system 16 to drive the all-terrain vehicle 100 to move. As shown in FIG. 1, the travel members 14 includes a front wheel 141 at the front of the all-terrain vehicle 100 and a rear wheel 142 at the rear of the all-terrain vehicle 100. The all-terrain vehicle 100 further includes a vehicle door assembly on left and right sides of the all-terrain vehicle 100. The all-terrain vehicle 100 in the present embodiment may be various types of all-terrain vehicles including SSV and UTV.

As shown in FIG. 2, as an embodiment, the frame 11 includes a rear frame 111 behind the cockpit 101, and the prime mover system 15 and the transmission system 16 are at least partially arranged on the rear frame 111.

As shown in FIG. 3, as an embodiment, the suspension system 13 includes a front suspension 131, and the front wheel 141 also includes a left front wheel 1411 arranged on the left of the frame 11 and a right front wheel 1412 arranged on the right of the frame 11, wherein both the left front wheel 1411 and the right front wheel 1412 are connected to the frame 11 by means of the front suspension 131.

As an embodiment, the transmission system 16 includes a transmission shaft (not shown) and a front axle assembly 161. The two ends of the transmission shaft are respectively rotatably connected to the prime mover system 15 and the front axle assembly 161, thereby transmitting the power output from the prime mover system 15 to the front axle assembly 161. The front axle assembly 161 at least includes a differential, differential case, electrical motor, and transmission gears. The differential and the electrical motor are positioned inside the differential case, and the electrical motor is used to control the differential to switch between a differential state and a locked state. It should be noted that in the differential state, the left front wheel 1411 and the right front wheel 1412 can achieve differential rotation, thereby reducing the wear of the left front wheel 1411 and/or the right front wheel 1412. In the locked state, the left front wheel 1411 and the right front wheel 1412 can maintain constant speed rotation to enhance the vehicle's passability. The differential is connected to the transmission shaft through transmission gears.

As an embodiment, the transmission system 16 further includes a left half shaft 162 and a right half shaft 163. The front axle assembly 161 includes a left output end and a right output end, where the left and right ends of the left half shaft 162 are respectively connected to the left front wheel 1411 and the left output end, and the left and right ends of the right half shaft 163 are respectively connected to the right front wheel 1412 and the right output end, so that the front axle assembly 161 can transmit power to the front wheel 141 through the half shaft, thereby driving the front wheel 141 to rotate.

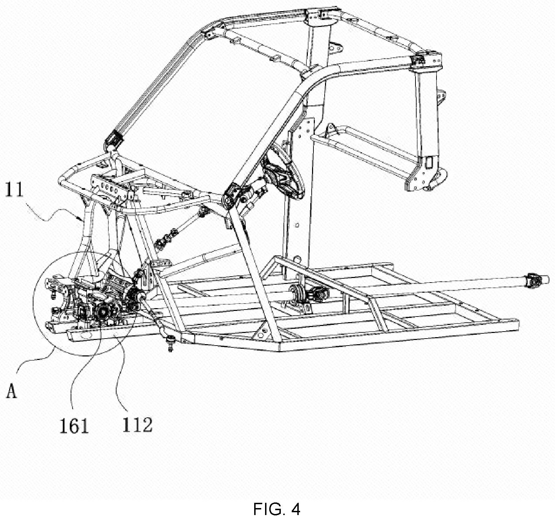

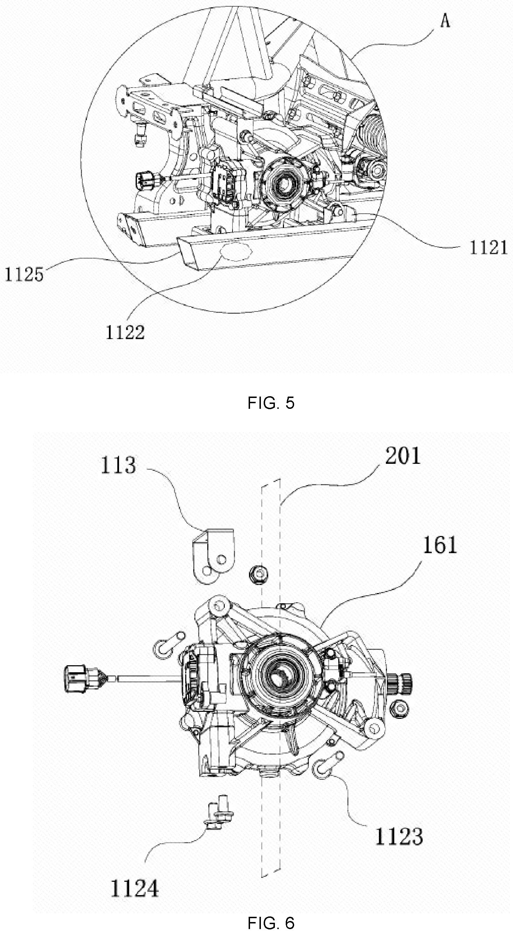

As shown in FIG. 4 and FIG. 5, as an embodiment, the frame 11 includes a front axle mounting bracket 112 at the front of the frame 11 and surrounds the front axle assembly 161. The front axle mounting bracket 112 includes a first mounting portion 1121 and a second mounting portion 1122. In the length direction of the all-terrain vehicle 100, the first mounting portion 1121 is positioned behind the second mounting portion 1122. The front axle mounting bracket 112 is connected to the rear end of the front axle assembly 161 through the first mounting portion 1121, and is further connected to the front end of the front axle assembly 161 through the second mounting portion 1122. The connection direction between the first mounting portion 1121 and the front axle assembly 161 is substantially parallel to the width direction of the all-terrain vehicle 100, and the connection direction between the second mounting portion 1122 and the front axle assembly 161 is substantially parallel to the height direction of the all-terrain vehicle 100.

As shown in FIG. 5 and FIG. 6, as an embodiment, the front axle assembly 161 is connected to the first mounting portion 1121 through the first fastener 1123. The axis direction of the first fastener 1123 is the connection direction between the first mounting portion 1121 and the front axle assembly 161, that is, the axis direction of the first fastener 1123 is substantially parallel to the width direction of the all-terrain vehicle 100. The front axle assembly 161 is connected to the second mounting portion 1122 through the second fastener 1124. The axis direction of the second fastener 1124 is the connection direction between the second mounting portion 1122 and the front axle assembly 161, that is, the axis direction of the second fastener 1124 is substantially parallel to the height direction of the all-terrain vehicle 100. It should be noted that when mounting the front axle assembly 161, it is necessary to maintain the connection between the front axle assembly 161 and the transmission shaft 166, and push the front axle assembly 161 to the position along the length direction. However, pushing the front axle assembly 161 may be difficult. Through the above, the interference between the front axle assembly 161 and the front axle mounting bracket 112 during mounting cab be avoided, thereby reducing the difficulty of mounting the front axle assembly 161. The first fastener 1123 and the second fastener 1124 may be bolts or screws, etc.

As an embodiment, the first mounting portion 1121 may be a sheet metal, and the first mounting portion 1121 has an end face that is substantially perpendicular to the width direction of the all-terrain vehicle 100. The front axle assembly 161abuts against the end face of the first mounting portion 1121 along the width direction, thereby increasing the contact area between the front axle assembly 161 and the first mounting portion 1121, increasing the connection strength between the front axle assembly 161 and the first mounting portion 1121, and thereby improving the connection stability between the front axle assembly 161 and the front axle mounting bracket 112.

As an embodiment, the second mounting portion 1122 has a shaft hole that runs through the front axle mounting bracket 112 along the height direction of the all-terrain vehicle 100, and the axis direction of the shaft hole is consistent with the axis direction of the second fastener 1124. Due to the need to move the front axle assembly 161 from the second mounting portion 1122 towards the first mounting portion 1121 during the connection process between the front axle assembly 161 and the front axle mounting bracket 112, the above arrangement can avoid interference between the front axle assembly 161 and the second mounting portion 1122 during the movement process, thereby reducing the assembly difficulty of the front axle assembly 161 and improving the assembly efficiency of the front axle assembly 161.

As shown in FIG. 6, as an embodiment, the frame 11 further includes a movable connector (Front Axle Adapter Bracket) 113 at least partially arranged above the front axle assembly 161. The movable connector 113 is respectively detachably connected to the front axle mounting bracket 112 and the front axle assembly 161. In the case where the front axle assembly 161 is connected to the front axle mounting bracket 112 through the first mounting portion 1121 and the second mounting portion 1122, the front axle assembly 161 can further be connected to the front axle mounting bracket 112 by the movable connector 113. The above arrangement improves the connection strength between the front axle assembly 161 and the front axle mounting bracket 112, thereby enhancing the stability of the front axle assembly 161.

As an embodiment, when viewed from the width direction of the all-terrain vehicle 100, the movable connector 113 is at least partially positioned in front of the left half axle 162 and the right half axle 163. A transmission center plane 201 is defined as a plane perpendicular to the length direction of the all-terrain vehicle 100 and passing through the connection point between the front axle assembly 161 and the left half shaft 162. When viewed from the width direction of the all-terrain vehicle 100, the movable connector 113 is at least partially in front of the transmission center plane 201 to avoid interference between the movable connector 113 and corresponding components, which may be a left pull rod, a right pull rod, the steering gear, and the like. This also make the load distribution of the front axle assembly 161 uniform, improving the stability of the all-terrain vehicle 100.

As shown in FIG. 5, as an embodiment, the front axle mounting bracket 112 includes an installation pipe 1125 extending along the length direction. The installation pipe 1125 is arranged below the front axle assembly 161 and is used to support the front axle assembly 161. Both the first mounting portion 1121 and the second mounting portion 1122 are arranged on the installation pipe 1125, and the first mounting portion 1121 is welded to the installation pipe 1125. The shaft hole of the second mounting portion 1122 penetrates the installation pipe 1125. The installation pipe 1125 includes a sliding area for the front axle assembly 161 to slide, which is positioned in front of the first mounting portion 1121. The front axle assembly 161 can slide on the sliding area, and the length of the sliding area extending along the length direction is greater than or equal to the length of the front axle assembly 161 extending along the length direction.

As an embodiment, the first mounting portion 1121 is at least partially positioned behind the front axle assembly 161. During the mounting process of the front axle assembly 161, when the front axle assembly 161 slides to the mounting position, the first mounting portion 1121 abuts against the front axle assembly 161, and the first mounting portion 1121 arranged behind the front axle assembly 161 limits the movement along the length direction of the all-terrain vehicle 100. Furthermore, the front axle assembly 161 can be connected to the first mounting portion 1121 and the second mounting portion 1122 respectively. Due to the fact that the front axle assembly 161 is first connected to the transmission shaft 166 before being connected to the frame 11, the overall weight of the front axle assembly 161 is relatively large. The above arrangement can reduce the mounting difficulty between the front axle assembly 161 and the front axle mounting bracket 112.

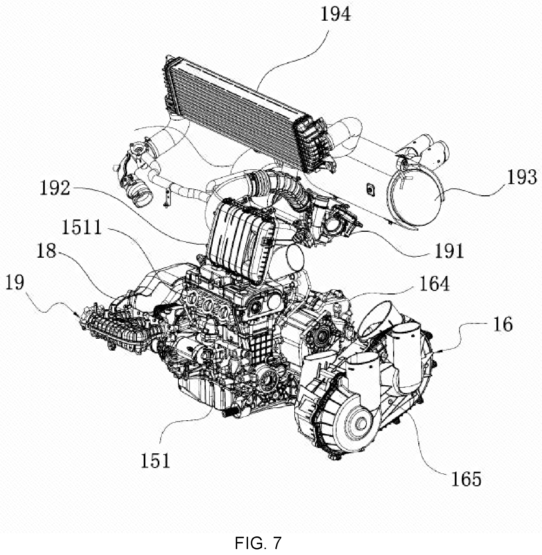

As shown in FIG. 7, as an embodiment, the prime mover system 15 includes an engine 151 for providing a power source, the transmission system 16 includes a speed reducer 164 and a transmission 165, and the all-terrain vehicle 100 further includes an auxiliary drive system 18 connected to the engine 151. The all-terrain vehicle 100 includes a power train 19 at least partially mounted on the rear frame 111, the power train 19 includes the aforementioned engine 151, the speed reducer 164, the transmission 165, and the auxiliary drive system 18. The transmission 165 and the auxiliary drive system 18 are respectively arranged on the left and right sides of the engine 151 and connected to the crankshaft (not shown) of the engine 151. The engine 151 can drive the transmission 165 and the auxiliary drive system 18 arranged on the left and right sides through the crankshaft. The speed reducer 164 is mounted behind the engine 151 and is connected to the engine 151 in a transmission mode. The engine 151 includes an intake port 1511 and an exhaust port (not shown), with the intake port 1511 facing the front of the all-terrain vehicle 100 and the exhaust port facing the rear of the all-terrain vehicle 100. The power train 19 further includes a turbocharger 191 connected to the exhaust port, the turbocharger 191 is at least partially positioned between the engine 151 and the reducer 164, thereby improving the compactness of the entire vehicle. By the above arrangement, the impact of high-temperature and high-pressure gases emitted by the engine 151 on the cockpit 101 can be reduced, thereby improving the comfort of the environment inside the cockpit 101.

As an embodiment, the power train 19 further includes an air filter 192 and a muffler 193. The air filter 192 is used to absorb and filter air, and the air filter 192 is directly or indirectly connected to the intake 1511 of the engine 151. The muffler 193 is positioned behind the power train 19 and is used to filter the high-temperature and high-pressure gases emitted from the exhaust port. As mentioned above, since the power train 19 includes a turbocharger 191, the engine 151 can obtain air absorbed by the air filter 192 by means of turbocharging. The air filter 192 is connected to the intake 1511 of the engine 151 through the turbocharger 191.

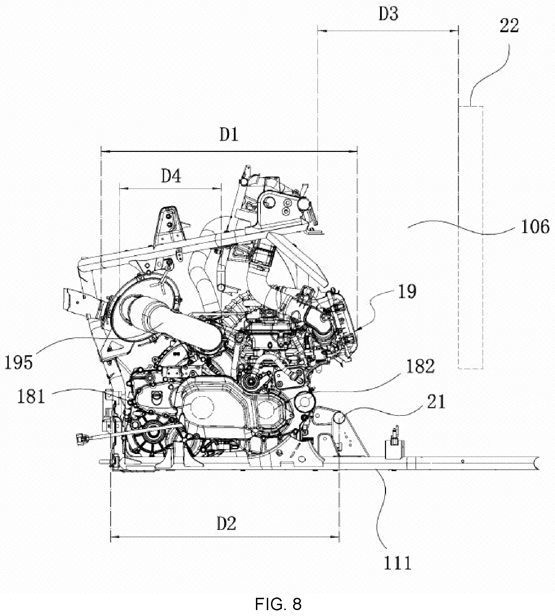

As shown in FIG. 8, as an embodiment, the all-terrain vehicle 100 further includes a support cradle 21, and the power train 19 is connected to the rear frame 111 by the support cradle 21. The support cradle 21 is at least partially disposed on the front side of the power train 19, and the support cradle 21 is also at least partially disposed on the rear side of the power train 19. When viewed from the width direction of the all-terrain vehicle 100, the air filter 192 is at least partially positioned in front of the engine 151. The distance between the front-most end of the air filter 192 and the rear-most end of the muffler 193 along the length direction is defined as a power train layout length D1 of the power train 19, and the maximum distance between the support cradle 21 along the length direction is defined as a power train mounting length D2 of the power train 19.

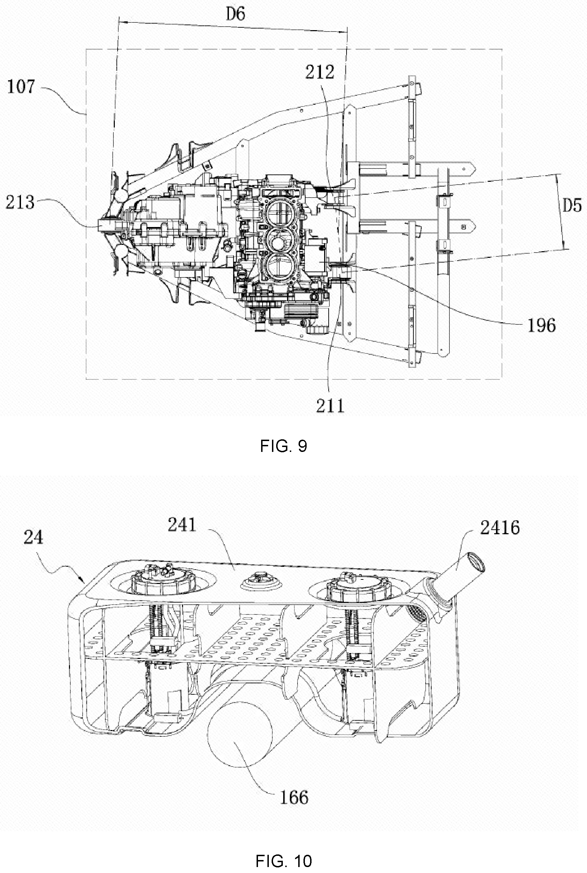

As shown in FIG. 9, in the embodiment of the present application, the support cradle 21 includes a first hanger 211 and a second hanger 212 arranged on the front side of the power train 19. The first hanger 211 is arranged on the right side of the second hanger 212. The support cradle 21 further includes a third hanger 213 arranged on the rear side of the power train 19. The elastic center of the first hanger 211 is positioned at the front-most end of the power train 19 compared to the elastic centers of the second hanger 212 and the third hanger 213. The elastic center of the third hanger 213 is positioned at the rear-most end of the power train 19 relative to the elastic centers of the first hanger 211 and the second hanger 212. It should be noted that the power train mounting length D2 of the power train 19 is a distance in the length direction between the elastic center of the first hanger 211 and the elastic center of the third hanger 213.

As an optional embodiment, a ratio of the power train layout length D1 of the power train mounting length D2 is in the range from 1.3 to 1.9. Furthermore, the ratio of the power train layout length D1 of the power train mounting length D2 is in the range from 1.4 to 1.7. Furthermore, the ratio of the power train layout length D1 of the power train mounting length D2 is 1.6. Due to the fact that the power train 19 requires a certain amount of layout space, if the ratio of the power train layout length D1 of the power train mounting length D2 is too large, the support cradle 21 is not enough to support the power train 19, which affects the stability of the connection between the power train 19 and the rear frame 111. If the ratio of the power train layout length D1 of the power train mounting length D2 is too small, it will result in a small gap between the various components of the power train 19, which is not conducive to the arrangement of power train 19. Through the above arrangement, the rationality of the layout of the power train 19 has been improved, ensuring the support effect of the support cradle 21 on the power train 19, thereby enhancing the stability of the power train 19.

As shown in FIG. 7 and FIG. 8, as an embodiment, the power train 19 further includes an inter cooler 194 at least partially positioned above the engine 151 and connected to the intake port 1511. The all-terrain vehicle 100 further includes a seat assembly 22 positioned in front of the inter cooler 194. A predetermined space 106 for air circulation is defined in front of the inter cooler 194, ie., between the inter cooler 194 and the seat assembly 22. A distance D3 of the predetermined space 106 extending along the length direction is in the range from 128 mm to 284 mm. As an embodiment, the distance D3 of the predetermined space 106 extending along the length direction is in the range from 140 mm to 256 mm. As an embodiment, the distance D3 of the predetermined space 106 extending along the length direction is in the range from 152 mm to 228 mm. If the distance D3 of the predetermined space 106 extending along the length direction is too large, the inter cooler 194 may interfere with the muffler 193, or occupy some of the space in the cockpit 101, which will affect the comfort of rear passengers. If the distance D3 of the predetermined space 106 extending along the length direction is too small, it is not conducive to the air circulation inside the predetermined space 106 and has a certain impact on the heat dissipation of the inter cooler 194. In addition, through the above arrangement, while ensuring the performance of the inter cooler 194, the rationality and compactness of the power train 19 layout can also be improved.

As an embodiment, the power train 19 further includes an exhaust pipe 195, and the two ends of the exhaust pipe 195 are respectively connected to the turbocharger 191 and the muffler 193. A ratio of the length D4 of the exhaust pipe 195 extending along the length direction of the layout length D1 of the power train 19 is in the range from 0.3 to 0.5. As an embodiment, the ratio of the length D4 of the exhaust pipe 195 extending along the length direction of the layout length D1 of the power train 19 is in the range from 0.35 to 0.45. As an embodiment, the ratio of the length D4 of the exhaust pipe 195 extending along the length direction of the layout length D1 of the power train 19 is 0.4. If the ratio of the length D4 of the exhaust pipe 195 extending along the length direction of the layout length D1 of the power train 19 is too large, the length D4 of the exhaust pipe 195 extending along the length direction is too long, and the exhaust pipe 195 needs to occupy too much layout space, which reduces the compactness of the all-terrain vehicle 100. If the ratio of the length D4 of the exhaust pipe 195 extending along the length direction of the layout length D1 of the power train 19 is too small, ie., the length D4 of the exhaust pipe 195 extending along the length direction is too short. Therefore, the distance between the muffler 193 and the engine 151 is too short. If the distance between the muffler 193 and the engine 151 is too short, which makes it difficult to arrange the wiring harnesses around the engine 151. Through the above arrangement, it is convenient to arrange the wiring harnesses around the engine 151 while also improving the compactness of the all-terrain vehicle 100.

As shown in FIG. 8, as an embodiment, the auxiliary drive system 18 includes a first motor 181 and a second motor 182. The first motor 181 is connected to the crankshaft of the engine 151, and the first motor 181 always maintains a power generation state when the engine 151 is working. The second motor 182 is connected to the first motor 181 in a transmission mode. When the electric power consumption of the all-terrain vehicle 100 is greater than or equal to the preset threshold, the second motor 182 switches to the power generation state.

As an embodiment, when the power consumption of the all-terrain vehicle 100 is low, the first motor 181 maintains a generating state and the second motor 182 maintains a low-speed state to meet the power demand of the all-terrain vehicle 100. When the power consumption of the all-terrain vehicle 100 is high, both the first motor 181 and the second motor 182 remain in a generating state to meet the power demand of the all-terrain vehicle 100. Through the above arrangement, while meeting the electricity demand of the all-terrain vehicle 100, it is also possible to avoid damage to the second motor 182 caused by prolonged use, thereby extending the service life of the second motor 182. The first motor 181 is a permanent magnet motor, and the second motor 182 is an excitation motor.

As shown in FIG. 10, as an embodiment, the all-terrain vehicle 100 further includes a fuel system 24 arranged on the frame 11. The fuel system 24 is at least partially connected to the prime mover system 15 and provides fuel for the prime mover system 15. The fuel system 24 includes a fuel tank 241 extending along the width direction of the all-terrain vehicle 100. The fuel tank 241 defines a saddle-shaped depression 2411, and the transmission system 16 includes a transmission shaft 166 passing through the saddle-shaped depression 2411. Optionally, at least a portion of the transmission shaft 166 overlaps with the fuel tank 241 in the width direction of the all-terrain vehicle 100, and at least a portion of the transmission shaft 166 overlaps with the fuel tank 241 in the height direction of the all-terrain vehicle 100. The above arrangement of the fuel tank 241 can not only avoid the transmission system 16 positioned at the bottom of all-terrain vehicle 100, but also balance the weight distribution of all-terrain vehicle 100 in the width direction. In this embodiment, the saddle-shaped depression design at the bottom of the fuel tank 241 can effectively avoid the transmission shaft 166, thereby fully utilizing the bottom space of the all-terrain vehicle 100 to arrange the fuel tank 241, making the bottom structure of the seats of the all-terrain vehicle 100 more compact and improving the overall space utilization rate. The fuel tank 241 includes a refueling pipe 2416 for refueling. One end of the refueling pipe 2416 extends into the fuel tank 241, and the other end of the refueling pipe 2416 is exposed outside the fuel tank 241. The refueling pipe 2416 can increase the convenience of refueling operation.

Furthermore, the refueling pipe 2416 is positioned in front of the fuel tank 241 in the length direction of the all-terrain vehicle 100. The refueling pipe 2416 has a function of guiding and controlling the direction of the fuel gun's insertion and the direction of oil injection during refueling, thereby protecting a first oil pump 2414 and other components in the fuel tank 241, and preventing damage to the first oil pump 2414 due to collision.

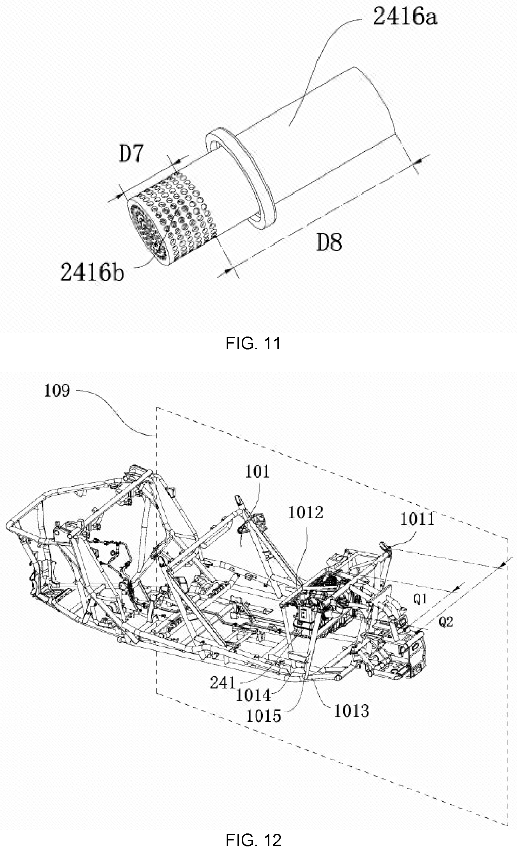

As shown in FIG. 11, as an embodiment, the refueling pipe 2416 includes a pipe body 2416a and a strainer 2416b connected to one end of the pipe body 2416a. On the one hand, the strainer 2416b can prevent external devices from entering the fuel tank 241 to steal fuel. On the other hand, the strainer 2416b with filter holes can filter impurities in the fuel. The strainer 2416b can directly block impurity particles in the refueling pipe 2416, thereby preventing impurities from entering the fuel tank 241 and avoiding impurities in the fuel from blocking the pipeline. A ratio of a length D7 of the strainer 2416b in the axial direction of the refueling pipe 2416 to a length D8 of the refueling pipe 2416 in the axial direction of the refueling pipe 2416 is in the range from 0.1 to 0.5. As an embodiment, the ratio of the length D7 of the strainer 2416b in the axial direction of the refueling pipe 2416 to the length D8 of the refueling pipe 2416 in the axial direction of the refueling pipe 2416 is in the range from 0.15 to 0.45. As an embodiment, the ratio of a length D7 of the strainer 2416b in the axial direction of the refueling pipe 2416 to the length D8 of the refueling pipe 2416 in the axial direction of the refueling pipe 2416 is in the range from 0.2 to 0.4. The aperture of the filter hole is in the range from 2.5 millimeters to 5 millimeters. The aperture of the filter holes within the above range can ensure that the vast majority of impurities can be blocked outside the fuel tank 241. As an embodiment, the aperture of the filter holes is in the range from 3 millimeters to 4.5 millimeters. As an embodiment, the aperture of the filter holes is in the range from 3.5 millimeters to 4 millimeters. In addition, the strainer 2416b may be integrally formed with the refueling pipe body 2416a. The integrally formed design can enhance the strength of the strainer 2416b, which avoids dropping due to fuel impact, reduce manufacturing assembly processes, and lower manufacturing costs. The strainer 2416b and the refueling pipe body 2416a may also be assembled together after being manufactured separately. When the filter hole is blocked by impurities, the strainer 2416b may be directly removed for cleaning or replacement, thereby reducing maintenance costs. At the same time, the separate manufacturing of the strainer 2416b and the refueling pipe body 2416a can also choose different strainer 2416b to adapt to different vehicle models, increase the versatility of the strainer 2416b, and reduce production and manufacturing costs.

As shown in FIG. 12, the frame 11 includes a cockpit 101 formed around it for the user to ride. The fuel tank 241 is positioned at the front of the cockpit 101 along the length direction of the all-terrain vehicle. Optionally, the fuel tank 241 may be positioned at the front of the passenger seat of the all-terrain vehicle 100. A longitudinal plane 109 is defined as being perpendicular to the width direction of the all-terrain vehicle 100. A projection of the cockpit 101 projected along the width direction of the all-terrain vehicle 100 on the longitudinal plane 109 is defined as a cockpit projection 102. A projection of the fuel tank 241 projected along the width direction of the all-terrain vehicle 100 on the longitudinal plane 109 is defined as a fuel tank projection 103, and the fuel tank projection 103 is positioned in front of the cockpit projection 102. The above configuration of fuel tank 241 changes the traditional position structure of fuel tank 241. Placing the fuel tank 241 in front of the cockpit 101 can expand the storage space of the all-terrain vehicle 100.

The cockpit 101 includes a first upper beam 1011, a second upper beam 1012, a first lower beam 1013, a second lower beam 1014, and a inclined beam 1015. The first upper beam 1011, the second upper beam 1012, the first lower beam 1013, and the second lower beam 1014 extend along the width direction of the all-terrain vehicle 100. The first upper beam 1011 is connected to the first lower beam 1013 through inclined beams 1015 positioned on two sides, and the second upper beam 1012 is connected to the second lower beam 1014 through inclined beams 1015 positioned on two sides. The first upper beam 1011, the second upper beam 1012, the first lower beam 1013, the second lower beam 1014, and the inclined beams 1015 cooperatively defines a receiving space, and the fuel tank 241 is positioned in this receiving space. The fuel tank 241 is surrounded by the first upper beam 1011, the second upper beam 1012, the first lower beam 1013, the second lower beam 1014, and the inclined beams 1015. When the all-terrain vehicle 100 is impacted by external forces, the first upper beam 1011, the second upper beam 1012, the first lower beam 1013, the second lower beam 1014, and the inclined beams 1015 can provide protection for the fuel tank 241, thereby avoiding damage to the fuel tank 241 and improving its safety and service life.

The prime mover system 15 of the all-terrain vehicle 100 in this embodiment is positioned at the rear of the frame 11. Due to long-term operation, the prime mover system 15 is prone to heat generation, and the fuel tank 241 is arranged far away from the engine 151, which can avoid heating of the fuel tank 241 and the fuel in the fuel tank 241, and improve the safety of the fuel tank 241.

As an embodiment, the frame includes at least four inclined beams 1015. The size of the fuel tank 241 in the width direction of all-terrain vehicle 100 is defined as a fuel tank width Q1, and the size of cockpit 101 in the width direction of all-terrain vehicle 100 is defined as a cockpit 101 width Q2. A ratio of the fuel tank width Q1 to the cockpit 101 width Q2 is in the range from 0.5 to 0.8. The overall weight of fuel tank 241 can be further limited by adjusting the ratio of the fuel tank 241 width to a cockpit 101 width, thereby ensuring the lightweight for all-terrain vehicle 100. As an embodiment, a ratio of the fuel tank width Q1 to the cockpit 101 width Q2 is in the range from 0.6 to 0.75. As an embodiment, a ratio of the fuel tank width Q1 to the cockpit 101 width Q2 is in the range from 0.5 to 0.7. The above arrangement of the fuel tank 241 can ensure that the fuel tank 241 is offset in the cockpit 101, and the offset of fuel tank 241 towards the passenger position can leave mounting space for components such as the steering system of the all-terrain vehicle 100.

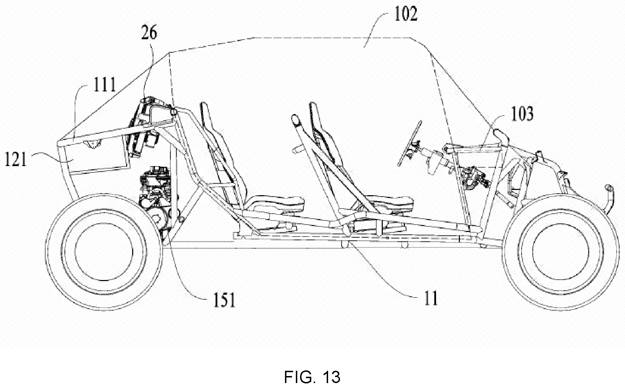

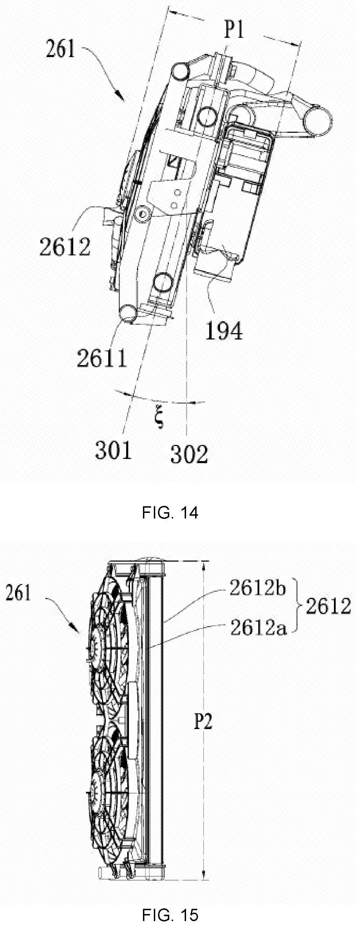

As shown in FIG. 13 and FIG. 14, the all-terrain vehicle 100 includes a cooling system 26 at least partially connected to the prime mover system 15. The cooling system 26 can assist the engine 151 in heat exchange, and the cooling system 26 can keep the engine 151 at an appropriate operating temperature. The cooling system 26 includes a cooling module 261 connected to the rear frame 111. The cooling module 261 is positioned above the engine 151 in the prime mover system 15 in the height direction of the all-terrain vehicle 100. The cooling module 261 is mainly used to dissipate heat from the engine 151, and its proximity to the engine 151 can improve the heat dissipation efficiency of the engine 151. The all-terrain vehicle 100 includes a vehicle body cover 12 and a seat assembly 22. The vehicle body cover 12 includes a cargo container 121 connected to the rear frame 111. The cooling module 261 is positioned behind the seat assembly 22 and in front of the cargo container 121 in the length direction of the all-terrain vehicle 100. The cooling module 261 is mounted between the seat assembly 22 and the cargo container 121, which can fully utilize the space inside the frame 11 and improve the space utilization rate of the all-terrain vehicle 100. The cooling module 261 is positioned adjacent the prime mover system 15, which can reduce the distance between the cooling module 261 and the heat dissipation pipeline of the engine 151, while also increasing the heat dissipation efficiency.

The cooling module 261 includes an integrated inter cooler 194, the radiator 2611, and the fan device 2612. The fan device 2612 is positioned on one side of the radiator 2611, while the inter cooler 194 is positioned on the other side of the radiator 2611. The inter cooler 194, the radiator 2611, and the fan device 2612 are integrated as a whole. The inter cooler 194 is used to reduce the intake temperature of the engine 151, improve the operational stability of the engine 151, and enhance the working efficiency of the engine 151. The radiator 2611 is in fluid communication with the engine 151. When the engine 151 is working, the high-temperature coolant generated by the engine 151 is discharged into the radiator 2611. The high-temperature coolant circulates and cools down in the radiator 2611, and then enters the engine 151 for cooling and dissipating heat. The fan device 2612 drives the air flow at the positions of the inter cooler 194 and the radiator 2611, increasing the speed of air flow, and carrying away the heat generated in the inter cooler 194 and the radiator 2611 through air flow to achieve heat dissipation of the cooling module 261. This embodiment of the application integrates the inter cooler 194, the radiator 2611, and the fan device 2612 into the cooling module 261, reducing the space occupied by the inter cooler 194, the radiator 2611, and the fan device 2612, improving the space utilization of the all-terrain vehicle 100, and optimizing the layout space of the all-terrain vehicle 100. The integrated inter cooler 194 and the radiator 2611 share a fan device 2612 for heat dissipation, which improves the utilization rate of the fan device 2612 and reduces the energy consumption of the all-terrain vehicle 100.

As shown in FIG. 14 and FIG. 15, the cooling module 261 defines a cooling module plane 301. The fan device 2612 includes several fans 2612a, axes of the fans 2612a are perpendicular to the cooling module plane 261a. A ratio of a dimension P1 of the cooling module 261 along the axis of the fan 2612a to a dimension P2 of the cooling module 261 along the width direction of the all-terrain vehicle 100 is in the range from 0.18 to 0.33. The dimension P1 of the cooling module 261 along the axis direction of the fan 2612a is the thickness of the cooling module 261, and the dimension P2 of the cooling module 261 along the width direction of the all-terrain vehicle 100 is the length of the cooling module 261. The dimension P1 of the cooling module 261 along the axis direction of the fan 2612a is the thickness of the cooling module 261, and the dimension P2 of the cooling module 261 along the width direction of the all-terrain vehicle 100 is the length of the cooling module 261. At the same time, the thickness of the cooling module 261 is relatively small, which increases the integration level of the cooling module 261 and can reduce the occupation of space in the length direction of the all-terrain vehicle 100 by the cooling module 261.

As an embodiment, a ratio of a dimension P1 of the cooling module 261 along the axis of the fan 2612a to a dimension P2 of the cooling module 261 along the width direction of the all-terrain vehicle 100 is in the range from 0.2 to 0.3. Furthermore, the ratio of the dimension P1 of the cooling module 261 along the axis of the fan device 2612 to a dimension P2 of the cooling module 261 along the width direction of the all-terrain vehicle 100 is in the range from 0.23 to 0.28.

A transverse plane 302 is defined as being perpendicular to the length direction of the all-terrain vehicle 100, and an angle ξ defined between the cooling module plane 261a and the transverse plane 302 is in the range from 5 degrees to 30 degrees. The cooling module 261 is inclined at a certain angle, which makes it more convenient for the fan device 2612 to drive the air circulation in the cooling module 261 area. The better the air circulation effect, the stronger the heat dissipation effect. Furthermore, the angle ξ defined between the cooling module plane 261a and the transverse plane 302 is in the range from 10 degrees to 25 degrees. Furthermore, the angle ξ defined between the cooling module plane 261a and the transverse plane 302 is in the range from 15 degrees to 20 degrees. In addition, the fans 2612a are aligned onto the cooling module plane 261a.

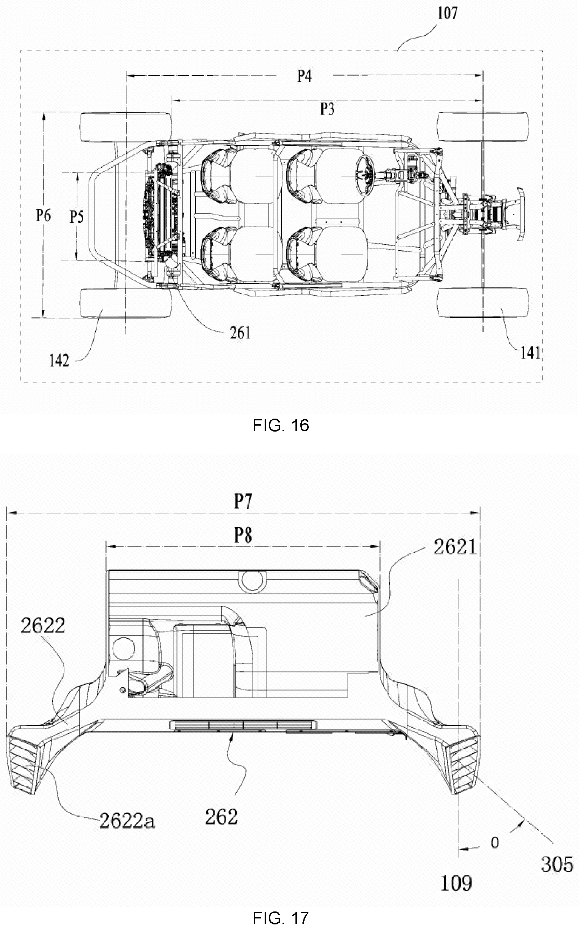

As shown in FIG. 16, a reference plane 107 is defined as being perpendicular to the height direction of the all-terrain vehicle 100. A projection of the cooling module 261 projected along the height direction of the all-terrain vehicle 100 on the reference plane 107 is defined as a cooling module 261 projection. A projection of the axis of the front wheel 141 projected along the height direction of the all-terrain vehicle 100 on the reference plane 107 defined as a front wheel 141 axis projection. A projection of the axis of the rear wheel 142 projected along the height direction of the all-terrain vehicle 100 on the reference plane 107 is defined as a rear wheel 142 axis projection. A distance from the front-most end of the cooling module 261 projection to the front wheel 141 axis projection is defined as a cooling module 261-front wheel distance P3. A distance from the front wheel 141 axis projection to the rear wheel 142 axis projection is defined as a drive shaft distance P4. A ratio of the cooling module 261-front wheel distance P3 to the drive shaft distance P4 is in the range from 0.6 to 0.9. The cooling module 261 is positioned closer to the rear wheel 142, which can avoid excessive occupation of the front space of the all-terrain vehicle 100 by the cooling module 261. At the same time, it is beneficial for the weight distribution of the all-terrain vehicle 100, avoiding the setting of the cooling module 261 from increasing the front weight of the all-terrain vehicle 100. Furthermore, the ratio of the cooling module 261-front wheel distance P3 to the the drive shaft distance P4 is in the range from 0.65 to 0.85. Furthermore, the ratio of the cooling module 261-front wheel distance P3 to the the drive shaft distance P4 is in the range from 0.65 to 0.85. A projection of the rear wheel 142 projected along the height direction of the all-terrain vehicle 100 on the reference plane 107 is defined as a rear wheel 142 projection. A ratio of a width P5 in the width direction of the all-terrain vehicle 100 projected by the cooling module 261 to a width P6 projected by the rear wheel 142 is in the range from 0.39 to 0.72. Controlling the size of the cooling module 261 in the width direction of the all-terrain vehicle 100 can not only make the size of the cooling module 261 large enough to increase cooling efficiency, but also avoid the cooling module 261 being too large and occupying the layout space of other components. Furthermore, the ratio of the width P5 projected by the cooling module 261 to the width P6 projected by the rear wheel 142 is in the range from 0.44 to 0.66. Furthermore, the width P5 projected by the cooling module 261 to the width P6 projected by the rear wheel 142 is in the range from 0.49 to 0.61.

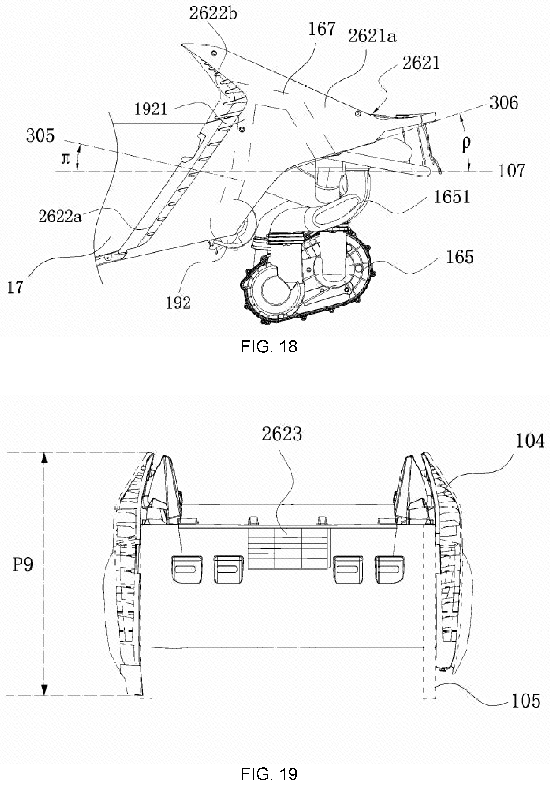

As shown in FIG. 17 and 18, as an embodiment, the cooling system 26 includes an air-guiding mechanism 262 for guiding air to the cooling module 261, and the air-guiding mechanism 262 extends along the width direction of the all-terrain vehicle 100. The air-guiding mechanism 262 includes an air-guiding housing 2621 and an air intake member 2622 on at least at one end of the air-guiding housing 2621. The air-guiding housing 2621 defines an air chamber 2621a, and the air intake member 2622 is in fluid communication with the air chamber 2621a. The cooling module 261 is at least partially positioned in the air chamber 2621a.

The air-guiding mechanism 262 is at least partially mounted on the frame 11 and behind a seat. The air-guiding mechanism 262 is used to guide air and dissipate heat for the cooling module 261, and the cooling module 261 is at least partially mounted in the air chamber 2621a defined by the air-guiding housing 2621. During the running of the all-terrain vehicle 100, the air-guiding mechanism 262 guides the air along the direction of the all-terrain vehicle 100 into the air chamber 2621a defined by the air air-guiding housing 2621 through the air intake member 2622. The cooling module 261 is arranged in the air chamber 2621a defined by the air air-guiding housing 2621 to remove the heat generated by the air flow and increase the heat dissipation effect of the cooling module 261 of the all-terrain vehicle 100.

The air intake member 2622 defines an air intake port 2622a, and the extension line of the air intake port 2622a is defined as an intake port extension line 305. An angle o defined between the intake port extension line 305 and the longitudinal plane 109 is in the range from 30 degrees to 70 degrees. The orientation of the air intake port 2622a has a significant impact on the air intake volume. When the orientation of the air intake port 2622a is within the above range, it can better utilize the air-guiding effect of the door assembly 17. At the same time, the orientation of the air intake port 2622a is also coordinated with the driving direction of the all-terrain vehicle 100, further increasing the air intake volume. Furthermore, the angle o defined between the intake port extension line 305 and the longitudinal plane 109 is in the range from 40 degrees to 60 degrees. Furthermore, the angle o defined between the intake port extension line 305 and the longitudinal plane 109 is in the range from 45 degrees to 65 degrees.

As an embodiment, the angle π defined between the intake port extension line 305 and the reference plane 107 is in the range from 0 to 30 degrees. Furthermore, the angle π defined between the intake port extension line 305 and the reference plane 107 is in the range from 5 to 25 degrees. Furthermore, the angle π defined between the intake port extension line 305 and the reference plane 107 is in the range from 10 to 20 degrees. The air-guiding housing 2621 at least partially overlaps with the prime mover system 15 in the height direction of the all-terrain vehicle 100, and the overlapping improves the space utilization of the all-terrain vehicle 100. A ratio of a width P7 in the width direction of the all-terrain vehicle 100 of the air-guiding mechanism 262 to a width P8 in the width direction of the all-terrain vehicle 100 of the air-guiding housing 2621 is in the range from 1.1 to 2.2. The air intake members 2622 in the air-guiding mechanism 262 are positioned on both sides of the air-guiding housing 2621. When viewed from the front of the all-terrain vehicle 100, the door assembly 17 is positioned between the air intake members 2622 on both sides. If the width of the air-guiding housing 2621 is narrower, the size of the air-guiding housing 2621 will be smaller. The airflow introduced by the air intake members 2622 can form a faster airflow in the air-guiding housing 2621, which is beneficial for improving heat dissipation efficiency. Furthermore, a ratio of a width P7 in the width direction of the all-terrain vehicle 100 of the air-guiding mechanism 262 to a width P8 in the width direction of the all-terrain vehicle 100 of the air-guiding housing 2621 is in the range from 1.3 to 2.1. Furthermore, a ratio of a width P7 in the width direction of the all-terrain vehicle 100 of the air-guiding mechanism 262 to a width P8 in the width direction of the all-terrain vehicle 100 of the air-guiding housing 2621 is in the range from 1.5 to 1.9. The projection of the air intake port 2622a projected along the length direction of the all-terrain vehicle 100 on the transverse plane 302 is defined as an intake port 2622a projection, and the area of the intake port 2622a projection is in the range from 700 cm² to 1600 cm². The intake port 2622a projection refers to the projections of all air intake ports 2622a of the air-guiding mechanism 262 projected along the length direction of the all-terrain vehicle 100 on the transverse plane 302. The size of the air intake ports 2622a is within the above range, which can meet the requirements of heat dissipation air volume and avoid the problem of excessive width of the all-terrain vehicle 100 caused by the air intake ports 2622a being too large.

As shown in FIG. 18, the bottom of the air-guiding housing 2621 is inclined, and the space at the bottom of the air-guiding housing 2621 can be used as maintenance space for other components of the engine 151 in this area, increasing the maintenance space of the all-terrain vehicle 100 for easy maintenance. The extension plane of the bottom of the air-guiding housing 2621 is defined as a bottom extension plane 306, and the angle ρ defined between the bottom extension plane 306 and the reference plane 107 is in the range from 10 to 30 degrees. The inclined bottom of the air-guiding housing 2621 can help avoid the prime mover system 15, and at the same time, the bottom of the air-guiding housing 2621 can increase the airflow introduced into the prime mover system 15 when the all-terrain vehicle 100 in running, improving the passive heat dissipation efficiency of the prime mover system 15. Further, the angle ρ defined between the bottom extension surface 306 and the reference plane 107 is in the range from 15 to 25 degrees. Further, the angle ρ defined between the bottom extension surface 306 and the reference plane 107 is in the range from 17 to 22 degrees. A detachable cover plate is arranged on the air-guiding housing 2621. The detachable cover plate can increase the maintenance convenience of the prime mover system 15 related components located below the air-guiding housing 2621. The air intake members 2622 are integrally formed with the air-guiding housing 2621, and the integration design can improve strength The air-guiding mechanism 262 may be made of plastic materials. Plastic material has the characteristics of being lightweight, and using plastic material as an air-guiding mechanism 262 can reduce the weight of the vehicle and improve its performance.

The air intake ports 2622a further includes upper air intake ports 2622b defined at the upper of the air intake ports 2622a. The transmission system 16 includes a transmission 165 and a transmission intake pipe 167. One end of the transmission intake pipe 167 is in fluid communication with the upper air intake ports 2622b, and the other end of the transmission intake pipe 167 is in fluid communication with the transmission 165. The transmission intake pipe 167 is connected between the upper air intake ports 2622b and the transmission 165, providing cooling air for the transmission 165. The air filter 192 includes an air filter intake pipe 1921, and one end of the air filter intake pipe 1921 is in fluid communication with the upper air intake ports 2622b. The air filter 192 is in fluid communication with the upper air intake ports 2622b through the air filter intake pipe 1921. Air filter 192 is used to provide filtering for the intake air of the engine 151, reducing impurities in the intake air and ensuring the normal operation of engine 151. The air filter intake pipe 1921 is in communication with the upper air intake ports 2622b and the air filter 192, which can provide the required clean air for the air filter 192 and the engine 151. The transmission intake pipe 167 and the air filter intake pipe 1921 may be connected to the same upper air intake ports 2622b, which can reduce the length of the intake pipe arrangement and make the arrangement of the transmission intake pipe 167 and the air filter intake pipe 1921 more compact, thereby saving the rear space of the all-terrain vehicle 100. At the same time, the upper air intake ports 2622b are positioned at a higher position in the all-terrain vehicle 100, resulting in a higher intake position for the air filter and the transmission 165. This ensures good cleanliness of the air filter 192 and the transmission 165 intake, which can improve the operational stability of the transmission 165 and engine 151.

As shown in FIG. 18, the transmission 165 further includes a transmission exhaust port 1651. In the longitudinal direction of the all-terrain vehicle 100, the transmission exhaust port 1651 is positioned towards the rear to allow the exhaust of the transmission 165 to blow towards the exhaust pipe 195 of the engine 151. After this setting, firstly, it can increase the air flow at the rear of engine 151, and secondly, it can also reduce the temperature of exhaust pipe 195, improving the heat dissipation efficiency of the rear of all-terrain vehicle 100.

As shown in FIG. 18 and FIG. 19, in the length direction of the all-terrain vehicle 100, the vehicle door assembly 17 is positioned in front of the air intake members 2622, thereby ensuring that the air intake members 2622 does not interfere with the opening and closing of the door assembly 17. A transverse plane 302 is defined as being perpendicular to the length direction of the all-terrain vehicle 100. The projection of the air intake member 2622 projected along the length direction of the all-terrain vehicle 100 on the transverse plane 302 is defined as an air intake member projection 104. The projection of the door assembly 17 projected along the length direction of the all-terrain vehicle 100 on the transverse plane 302 is defined as a vehicle door projection 105. The vehicle door projection 105 is positioned between the two air intake member projections 104. Through the above arrangement can avoid the air intake members 2622 from being blocked by the vehicle door assembly 17, and at the same time, the vehicle door assembly 17 can be used to guide airs into the air intake members 2622, increase the air volume entering the air intake members 2622, and improve the air intake efficiency of the air intake members 2622.

The air-guiding mechanism 262 further includes an auxiliary air intake members 2623 positioned at the front end of the air-guiding housing 2621. The auxiliary air intake member 2623 is arranged in the middle of and at the upper portion the air-guiding mechanism 262. The auxiliary air intake 2623 has the function of assisting air intake and guiding the all-terrain vehicle 100 at the same time as the air intake members 2622. The auxiliary air intake 2623 can enhance the air-guiding effect of the air-guiding mechanism 262 and improve the heat dissipation capacity of the all-terrain vehicle 100. The auxiliary air intake member 2623 overlaps partially with the seat assembly 22 when viewed in the length direction of the all-terrain vehicle 100, the seat assembly 22 has a small impact on the air intake of the partially overlapping auxiliary air intake member 2623, while the remaining parts can provide maximum auxiliary air guidance and intake. Moreover, the partially overlapping arrangement can save space and improve the space utilization of the all-terrain vehicle 100.

The above arrangement make the auxiliary air intake member 2623 substantially positioned above the seat, thereby reducing the influence of the seat on the auxiliary air intake member 2623, and enhancing the function of auxiliary air inlet 2623 and guiding air.

Optionally, the top of the seat assembly 22 is higher than the bottom of the auxiliary air intake 2623 in the height direction of the all-terrain vehicle 100, and the top of the seat assembly 22 is lower than the top of the auxiliary air intake member 2623. The auxiliary air intake member 2623 overlaps partially with the seat assembly 22 in the height direction of the all-terrain vehicle 100, which can further improve the structural compactness of the air intake member 2622 and the seat assembly 22.

A distance P9 from the top of the air intake member 2622 to the bottom of the air intake member 2622 in the height direction of all-terrain vehicle 100 is in the range from 650 mm to 1250 mm. The air intake member 2622 within this range can utilize the vehicle door assembly 17 to increase the air intake of the air intake member 2622 as much as possible, without affecting the layout of the cargo container and other components due to the large size of the air intake member 2622. Furthermore, the distance P9 from the top of the air intake member 2622 to the bottom of the air intake member 2622 is in the range from 750 mm to 1150 mm. Furthermore, the distance P9 from the top of the air intake member 2622 to the bottom of the air intake member 2622 is in the range from 850 mm to 1050 mm.

A projection of the air-guiding mechanism 262 projected along the length direction of the all-terrain vehicle 100 on the transverse plane 302 is defined as an air-guiding mechanism projection. A projection of the auxiliary air intake member 2623 projected along the length direction of the all-terrain vehicle 100 on the transverse plane 302 is defined as an auxiliary air intake member projection. The auxiliary air intake member 2623 occupies a certain proportion on the air-guiding mechanism 262 to better assist the air-guiding mechanism 262. When the proportion of the auxiliary air intake member 2623 on the air-guiding mechanism 262 is less than 0.21, the auxiliary air intake and guiding effect of the auxiliary air intake member 2623 on the air-guiding mechanism 262 is small. When the proportion of the auxiliary air intake member 2623 on the air-guiding mechanism 262 is greater than 0.39, which affects the spatial structure of the air-guiding mechanism 262. In summary, a ratio of a width along the width direction of the all-terrain vehicle 100 of the auxiliary air intake member projection to a width along the width direction of the all-terrain vehicle 100 of the air-guiding mechanism projection is in the range from 0.2 to 0.4. As an embodiment, the ratio of the width along the width direction of the all-terrain vehicle 100 of the auxiliary air intake member projection to the width along the width direction of the all-terrain vehicle 100 of the air-guiding mechanism projection is in the range from 0.24 to 0.36. As an embodiment, the ratio of the width along the width direction of the all-terrain vehicle 100 of the auxiliary air intake member projection to the width along the width direction of the all-terrain vehicle 100 of the air-guiding mechanism projection is in the range from 0.27 to 0.33.

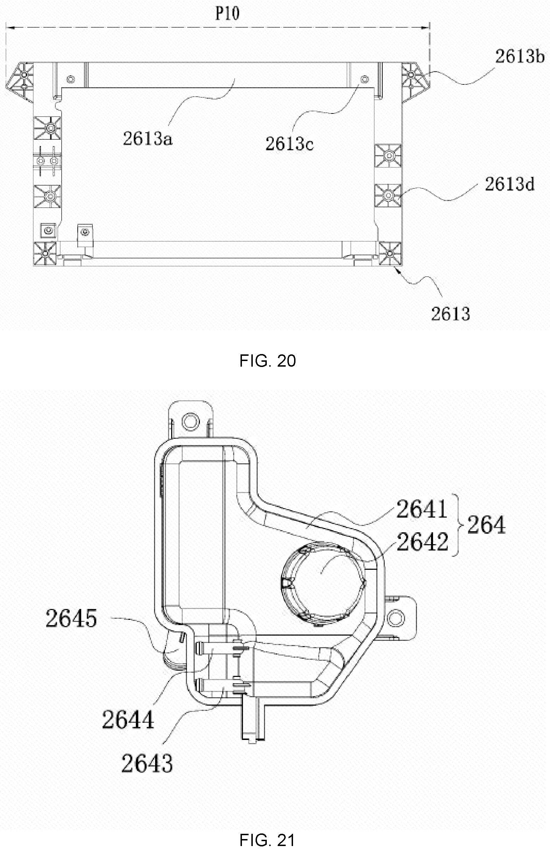

As shown in FIG. 14 and FIG. 20, as an embodiment, the cooling module 261 further includes a fixing bracket 2613 connected to the rear frame 111. The fixing bracket 2613 has a first mounting surface 2613a and a second mounting surface 2613b. The fan device 2612 is connected to the first mounting surface 2613a, the radiator 2611 is connected to the first mounting surface 2613a, and the radiator 2611 is positioned between the fan device 2612 and the fixing bracket 2613. The inter cooler 194 is connected to the second mounting surface 2613b. The fan device 2612, the radiator 2611, and the inter cooler 194 are formed as a whole by the fixing bracket 2613, realizing the integrated of the fan device 2612, the radiator 2611, and the inter cooler 194, saving the space of the all-terrain vehicle 100 and improving the space utilization rate of the all-terrain vehicle 100. The integrated setting of cooling module 261 can reduce the connection points of frame 11, reduce the installation brackets on frame 11, and improve assembly efficiency. The inter cooler 194, the radiator 2611, and the fan device 2612 can be assembled to the fixing bracket 2613 first during the mounting of the all-terrain vehicle 100 to form the cooling module 261, and then mounted as a whole on the frame 11, thereby saving installation and assembly processes. The extension plane of the fixing bracket 2613 is defined as a fixing bracket plane, and a fixing bracket perpendicular line is defined as being perpendicular to the fixing bracket plane. A ratio of a dimension P1 of the cooling module 261 along the fixing bracket perpendicular line to a dimension P10 of the fixing bracket 2613 along the width direction of the all-terrain vehicle 100 is in the range from 0.16 to 0.32. After arranging the cooling module 261 in the above way, the thickness of the cooling module 261 can be reduced. As an embodiment, a ratio of a dimension P1 of the cooling module 261 along the fixing bracket perpendicular line to a dimension P10 of the fixing bracket 2613 along the width direction of the all-terrain vehicle 100 is in the range from 0.19 to 0.29. As an embodiment, a ratio of a dimension P1 of the cooling module 261 along the fixing bracket perpendicular line to a dimension P10 of the fixing bracket 2613 along the width direction of the all-terrain vehicle 100 is in the range from 0.21 to 0.27. The radiator 2611 overlaps with the fixing bracket 2613 in the width direction of the all-terrain vehicle 100, and the radiator 2611 is arranged inside the fixing bracket 2613, which can protect the radiator 2611. A ratio of the size of the radiator 2611 along the perpendicular direction of the fixing bracket to the size of the fixing bracket 2613 along the perpendicular direction of the fixing bracket is in the range from 0.6 to 1.2. The thickness of the radiator 2611 is substantially the same as that of the fixing bracket 2613. The radiator 2611 can be placed in the fixing bracket 2613 to better protect it. As an embodiment, a ratio of the size of the radiator 2611 along the perpendicular direction of the fixing bracket to the size of the fixing bracket 2613 along the perpendicular direction of the fixing bracket is in the range from 0.7 to 1.1. As an embodiment, a ratio of the size of the radiator 2611 along the perpendicular direction of the fixing bracket to the size of the fixing bracket 2613 along the perpendicular direction of the fixing bracket is in the range from 0.8 to 1.0.

As shown in FIG. 20, the first mounting surface 2613a is provided with at least three fan mounting seats 2613c for fixing the fan device 2612, and the first mounting surface 2613a is provided with at least three radiator mounting seats 2613d for fixing the radiator 2611. The installation of the fan device 2612 and the radiator 2611 on the fixing bracket 2613 requires ensuring the connection strength. By setting the fan mounting seats 2613c and the radiator mounting seats 2613d on the fixing bracket 2613 respectively, the connection strength of the fan device 2612 and the radiator 2611 on the fixing bracket 2613 can be improved. In the vertical direction of the fixing bracket, a distance between the fan mounting seats 2613c and the first mounting surface 2613a is greater than or equal to the distance between the radiator mounting seats 2613d and the mounting surface. Through the above settings, the fan device 2612 is mounted outside the radiator 2611, thereby making it easier for the fan device 2612 to dissipate heat from the radiator 2611. Optionally, at least two of the radiator mounting seats 2613d are plug-in holes and at least one is a fixed hole. The radiator 2611 is connected to the fixing bracket 2613 through the plug-in holes and the fixing holes. The plug-in holes are arranged to facilitate the installation of the radiator 2611 to the fixing bracket 2613, reducing the difficulty of assembling the radiator 2611. The plug-in holes and fixed holes cooperate with each other to improve the stability of the connection between the radiator 2611 and the fixing bracket 2613. At least three connection seats are provided on the fixing bracket 2613 for connecting the fixing bracket 2613 to the frame 11. The connection seats on the fixing bracket 2613 serves as the connection structure between the cooling module 261 and the frame 11. At least three connection seats for connecting the frame 11 are arranged to ensure the reliability of the connection between the fixing bracket 2613 and the frame 11, thereby improving the reliability of the connection between the cooling module 261 and the frame 11. The fixing bracket 2613 may be made of plastic materials. Plastic materials have the characteristics of being lightweight, and using plastic material as an fixing bracket 2613 can reduce the weight of the vehicle and improve its performance. Plastic is a good insulator and chemically stable, with good corrosion resistance to chemicals such as acids or bases. Using plastic as a fixing bracket 2613 can adapt to various vehicle conditions and extend the service life of the fixing bracket 2613. The fixing bracket plane is parallel to the cooling module plane 261a.

As shown in FIG. 21, as an embodiment, the cooling system 26 further includes a coolant reservoir 264, a portion of the coolant reservoir 264 is connected to the engine 151, and another portion of the coolant reservoir 264 is connected to the radiator 2611. Furthermore, in the length direction of the all-terrain vehicle 100, the coolant reservoir 264 is positioned behind the upper air intake 2622b. The coolant reservoir 264 is mounted behind the upper air intake 2622b to utilize the air in the upper air intake 2622b for heat dissipation, thereby improving the overall heat dissipation efficiency of the cooling system 26.

The coolant reservoir 264 includes a main body 2641 and a pressure cap 2642 connected to the main body 2641. Optionally, the pressure cap 2642 includes a pressure valve with bidirectional flow capability. The pressure cap 2642 includes a closed state that seals the main body 2641 and a connected state in which the main body 2641 is in fluid communication with the external air. When the pressure inside the main body 2641 is greater than the first critical pressure and less than the second critical pressure, the pressure valve in the pressure cap 2642 closes, causing the pressure cap 2642 to be in a closed state. When the pressure inside the main body 2641 is less than the first critical pressure or greater than the second critical pressure, the pressure valve in the pressure cap 2642 opens, causing the pressure cap 2642 to be in a connected state, and the first critical pressure is less than the second critical pressure. The coolant reservoir 264 with pressure cap 2642 is substantially a fully enclosed environment. The enclosed coolant reservoir 264 can reduce the loss of coolant and improve the operational stability of the cooling system 26. The coolant reservoir 264 can balance the liquid level and pressure in the radiator 2611 and the engine 151, and the pressure cap 2642 can adjust the pressure of the coolant reservoir 264. During the running of all-terrain vehicle 100, the temperature of the coolant in engine 151 will gradually increase, and the pressure in engine 151 will also increase accordingly. The high-temperature and high-pressure coolant in engine 151 can affect its performance and service life, and there are steam bubbles in the high-temperature and high-pressure coolant, which can cause cavitation in engine 151 and affect its operational stability. After the all-terrain vehicle 100 is equipped with a coolant reservoir 264, the coolant reservoir 264 is connected to the engine 151, and the coolant can move between the engine 151 and the coolant reservoir 264. When the pressure in the coolant reservoir 264 is lower than the first critical pressure, the pressure cap 2642 of the coolant reservoir 264 opens, and the air in the environment can enter the coolant reservoir 264 to balance the pressure in the coolant reservoir 264. When the pressure in the coolant reservoir 264 exceeds the second critical pressure, the pressure cap 2642 of the coolant reservoir 264 opens, and excess steam in the coolant reservoir 264 can be discharged into the environment. By mounting a coolant reservoir 264 with a pressure cap 2642, it is possible to prevent situations where the pressure in the cooling system 26 is too low or too high, while ensuring that the pressure of the engine 151 is within an appropriate range, thereby improving the reliability of the engine 151. Optionally, the first critical pressure is in the range from -10 kPa to 0 kPa, and the second critical pressure is in the range from 90 kPa to 170 kPa. Furthermore, the first critical pressure is in the range from -7 kPa to -3 kPa, and the second critical pressure is in the range from 100 kPa to 160 kPa. Furthermore, the first critical pressure is in the range from -6 kPa to -4 kPa, and the second critical pressure is in the range from 115 kPa to 145 kPa.

As shown in FIG. 37, the coolant reservoir 264 further includes a first exhaust port 2643 for connecting to the engine 151, a second exhaust port 2644 for connecting to the radiator 2611, and a water replenishment port 2645 for replenishing coolant into the radiator 2611. The first exhaust port 2643 is connected to the engine 151 through a pipeline, which ensures pressure balance in the engine 151. The second exhaust port 2644 is connected to the radiator 2611 through a pipeline, which ensures pressure balance in the radiator 2611. The water replenishment port 2645 is connected to the radiator 2611 through a pipeline, and is used to replenish coolant to the radiator 2611. The water replenishment port 2645 can ensure the liquid level balance in the cooling system 26. The diameter of the first exhaust port 2643 is smaller than that of the water replenishment port 2645, and the diameter of the second exhaust port 2644 is smaller than that of the water replenishment port 2645. The first exhaust port 2643 and the second exhaust port 2644 only need to satisfy gas circulation, and the smaller diameter can also reduce the space they occupy. The radiator 2611 includes a radiator 2611 exhaust port and a radiator 2611 water replenishment port 2645. In the height direction of the all-terrain vehicle 100, the radiator 2611 exhaust port is defined above the radiator 2611 water replenishment port 2645. The second exhaust port 2644 in the coolant reservoir 264 is connected to the radiator 2611. The high-temperature and high-pressure coolant and steam in the radiator 2611 are discharged into the coolant reservoir 264 through the second exhaust port 2644 to reduce the air pressure in the radiator 2611 and prevent it from being too high. The overall structure of the coolant reservoir 264 is simple, and the cooling process is simple. The coolant reservoir 264 simultaneously meets the functions of degassing at the end of the engine 151 and at the end of the radiator 2611.

It should be understood that for those skilled in the art, improvements or transformations can be made based on the above description, and all such improvements and transformations should fall within the scope of protection of the claims attached to the present invention.

## Claims

1. An all-terrain vehicle comprising
a frame comprising a rear frame arranged on the rear of the frame;
a vehicle body cover at least partially arranged on the frame;
a prime mover system supported by the frame;
a transmission system at least partially connected to the prime mover system;
travel members at least partially connected to the transmission system;
a cooling system at least partially connected to the prime mover system;
a vehicle door assembly connected to the frame;
wherein, the cooling system is supported by the rear frame and comprises a cooling module at least partially connected to the prime mover system and an air-guiding mechanism for guiding air to the cooling module, the air-guiding mechanism comprises an air-guiding housing and air intake members positioned on two sides of the air-guiding housing, the air-guiding housing defines an air chamber, and the air intake members are in fluid communication with the air chamber, the cooling module is at least partially positioned in the air chamber, a transverse plane is defined as being perpendicular to the length direction of the all-terrain vehicle, a projection of the air intake member projected along the length direction of the all-terrain vehicle on the transverse plane is defined as an air intake member projection, and a projection of the vehicle door assembly projected along the length direction of the all-terrain vehicle on the transverse plane is defined as a vehicle door projection, The vehicle door projection is positioned between two air intake member projections.

2. The all-terrain vehicle of claim 1, wherein the vehicle door assembly is in front of the air intake members in the length direction of the all-terrain vehicle.

3. The all-terrain vehicle of claim 1, wherein the air intake member has an air intake port defining an intake port extension line, a longitudinal plane is defined as being perpendicular to the width direction of the all-terrain vehicle, an angle defined between the intake port extension line and the longitudinal plane is in the range from 30 degrees to 70 degrees.

4. The all-terrain vehicle of claim 1, wherein the cooling module comprises an inter cooler, a radiator, and a fan device, the fan device is positioned on one side of the radiator, and the inter cooler is positioned on the other side of the radiator; the cooling module defines a cooling module plane, and an axis of a fan is perpendicular to the cooling module plane, a ratio of the size of the cooling module along a direction of the axis of the fan to the size of the cooling module along the width direction of the all-terrain vehicle is in the range from 0.18 to 0.33.

5. The all-terrain vehicle of claim 4, further comprising a seat assembly, the frame and the vehicle body cover cooperatively defines a cockpit, and the seat assembly is at least partially positioned within the cockpit, and the vehicle body cover comprises a cargo container connected to the rear frame; the cooling module is positioned behind the seat assembly, and the cooling module is positioned in front of the cargo container in the length direction of the all-terrain vehicle.

6. The all-terrain vehicle of claim 4, wherein the cooling module further comprises a fixing bracket connected to the rear frame, the fixing bracket includes a first mounting surface and a second mounting surface, and the fan device is connected to the first mounting surface, the inter cooler is connected to the second mounting surface, the radiator is connected to the first mounting surface, and the radiator is positioned between the fan device and the inter cooler.

7. The all-terrain vehicle of claim 1, wherein the frame and the vehicle body cover cooperatively define a cockpit, and the all-terrain vehicle further comprises a fuel system, the fuel system is positioned in the frame and is at least partially connected to the prime mover system; the fuel system comprises a fuel tank positioned at the front of the cockpit, a longitudinal plane is defined as being perpendicular to the width direction of the all-terrain vehicle, a projection of the cockpit projected along the width direction on the longitudinal plane is defined as a cockpit projection, and a projection of the fuel tank projected along the width direction on the longitudinal plane is defined as a fuel tank projection, the fuel tank projection is positioned at the front of the cockpit projection.

8. The all-terrain vehicle of claim 7, wherein the cockpit comprises a first upper beam, a second upper beam, a first lower beam, a second lower beam, and inclined beams, wherein the first upper beam, the second upper beam, the first lower beam, and the second lower beam extend along the width direction of the all-terrain vehicle, the two sides of the first upper beam are connected to the first lower beam by means of the inclined beams, and the two sides of the second upper beam are connected to the second lower beam by means of the inclined beams, the first upper beam, the second upper beam, the first lower beam, the second lower beam, and the inclined beams cooperatively define a receiving space, and the fuel tank is positioned within the receiving space.

9. The all-terrain vehicle of claim 7, wherein the fuel system further comprises a refueling pipe connected to the fuel tank, and the refueling pipe is arranged in front of the fuel tank in the length direction of the all-terrain vehicle.

10. The all-terrain vehicle of claim 1, wherein the travel members comprises a left front wheel and a right front wheel, and the transmission system comprises a front axle assembly arranged at the front end of the frame, the front axle assembly comprises two output ends, which are respectively connected to the left front wheel and the right front wheel; the frame comprises a front axle mounting bracket surrounding the front axle assembly, wherein the front axle mounting bracket comprises a first mounting portion and a second mounting portion, and is connected to the front axle assembly through the first mounting portion and the second mounting portion, the first mounting portion is positioned behind the second mounting portion in the length direction of the all-terrain vehicle, and the connection direction between the second mounting portion and the front axle assembly is substantially parallel to the height direction of the all-terrain vehicle.

11. The all-terrain vehicle of claim 10, wherein the second mounting portion has a shaft hole that runs through the front axle mounting bracket along the height direction of the all-terrain vehicle, and the axis direction of the shaft hole is the connection direction between the first mounting portion and the front axle assembly.

12. The all-terrain vehicle of claim 10, wherein the first mounting portion is a sheet metal, the first mounting portion has an end face substantially perpendicular to the width direction of the all-terrain vehicle, and the front axle assembly abuts against the end face of the first mounting portion.

13. The all-terrain vehicle of claim 10, wherein the second mounting portion is a through hole, and the axis of the through hole is parallel to the height direction of the all-terrain vehicle.

14. The all-terrain vehicle of claim 10, wherein the frame further comprises a movable connector at least partially arranged above the front axle assembly, and the front axle assembly is connected to the front axle mounting bracket through the movable connector; the transmission system further comprises a left half shaft connected to the front axle assembly, a transmission center plane is defined as being perpendicular to the length direction of the all-terrain vehicle and passing through the connection point between the front axle assembly and the left half shaft, when viewed from the width direction of the all-terrain vehicle, the movable connector is at least partially positioned in front of the transmission center plane.

15. The all-terrain vehicle of claim 1, further comprising
a power train at least partially mounted on the rear frame, the power train comprises at least an engine, a transmission, an auxiliary drive system, and a speed reducer, the transmission and the auxiliary drive system are respectively arranged on the left and right sides of the engine, and the transmission and the auxiliary drive system at two ends are driven by the crankshaft of the engine, the speed reducer is arranged behind the engine and is connected to the engine in a transmission mode; the engine comprises an intake port and an exhaust port, wherein the intake port is oriented towards the front of the all-terrain vehicle and the exhaust port is oriented towards the rear of the all-terrain vehicle; the power train further comprises a turbocharger in fluid communication with the exhaust port, wherein the turbocharger is at least partially arranged between the engine and the speed reducer.

16. The all-terrain vehicle of claim 15, wherein the power train further comprises an air filter and a muffler, when viewed from the width direction of the all-terrain vehicle, the air filter is at least partially positioned in front of the engine, a distance extending along the length direction of the all-terrain vehicle from the front-most end of the air filter to the rear-most end of the muffler is defined as a power train layout length; the power train is connected to the rear frame by means of several hanging members, and a maximum interval between the hanging members along the length direction of the all-terrain vehicle is defined as a power train mounting length, a ratio of the power train layout length to the power train mounting length is in the range from 1.3 to 1.9.

17. The all-terrain vehicle of claim 15, wherein the power train further comprises an inter cooler at least partially positioned above the engine.

18. An all-terrain vehicle comprising
a frame comprising a rear frame arranged on the rear of the frame;
a vehicle body cover arranged on the frame;
a prime mover system arranged on and supported by the rear frame;
a transmission system at least partially connected to the prime mover system;
travel members arranged under the frame and at least partially connected to the transmission system;
a cooling system at least partially connected to the prime mover system;
wherein the cooling system is arranged on the rear frame and comprises a cooling module at least partially connected to the prime mover system and an air-guiding mechanism for guiding air to the cooling module, the air-guiding mechanism extends along the width direction of the all-terrain vehicle, and comprises an air-guiding housing and an air intake member positioned at least at one end of the air-guiding housing, an air chamber is defined inside the air-guiding housing, and the air intake member is in fluid communication with the air chamber. the cooling module is at least partially positioned in the air chamber.

19. The all-terrain vehicle of claim 18, further comprising a vehicle door assembly connected to the frame; the vehicle door assembly is in front of the air intake member in the length direction of the all-terrain vehicle.

20. The all-terrain vehicle of claim 18, wherein the air intake member has an air intake port defining an intake port extension line, a longitudinal plane is defined as being perpendicular to the width direction of the all-terrain vehicle, an angle defined between the intake port extension line and the longitudinal plane is in the range from 30 degrees to 70 degrees.

21. The all-terrain vehicle of claim 18, wherein the frame and the vehicle body cover cooperatively define a cockpit, the cooling module comprises an inter cooler, a radiator, and a fan device, the fan device is positioned on one side of the radiator, and the inter cooler is positioned on the other side of the radiator; the cooling module defines a cooling module plane, and an axis of a fan is perpendicular to the cooling module plane, a ratio of the size of the cooling module along a direction of the axis of the fan to the size of the cooling module along the width direction of the all-terrain vehicle is in the range from 0.18 to 0.33.

22. The all-terrain vehicle of claim 21, further comprising a seat assembly at least partially positioned within the cockpit, and the vehicle body cover comprises a cargo container connected to the rear frame; the cooling module is positioned behind the seat assembly, and the cooling module is positioned in front of the cargo container in the length direction of the all-terrain vehicle.

23. The all-terrain vehicle of claim 22, wherein the cooling module further comprises a fixing bracket connected to the rear frame, the fixing bracket includes a first mounting surface and a second mounting surface, and the fan device is connected to the first mounting surface, the inter cooler is connected to the second mounting surface, the radiator is connected to the first mounting surface, and the radiator is positioned between the fan device and the inter cooler.

24. The all-terrain vehicle of claim 18, wherein the frame and the vehicle body cover cooperatively define a cockpit, and the all-terrain vehicle further comprises a fuel system, the fuel system is positioned in the frame and is at least partially connected to the prime mover system; the fuel system comprises a fuel tank positioned at the front of the cockpit, a longitudinal plane is defined as being perpendicular to the width direction of the all-terrain vehicle, a projection of the cockpit projected along the width direction on the longitudinal plane is defined as a cockpit projection, and a projection of the fuel tank projected along the width direction on the longitudinal plane is defined as a fuel tank projection, the fuel tank projection is positioned at the front of the cockpit projection.

25. The all-terrain vehicle of claim 24, wherein the cockpit comprises a first upper beam, a second upper beam, a first lower beam, a second lower beam, and inclined beams, wherein the first upper beam, the second upper beam, the first lower beam, and the second lower beam extend along the width direction of the all-terrain vehicle, the two sides of the first upper beam are connected to the first lower beam by means of the inclined beams, and the two sides of the second upper beam are connected to the second lower beam by means of the inclined beams, the first upper beam, the second upper beam, the first lower beam, the second lower beam, and the inclined beams cooperatively define a receiving space, and the fuel tank is positioned within the receiving space.

26. The all-terrain vehicle of claim 24, wherein the fuel system further comprises a refueling pipe connected to the fuel tank, and the refueling pipe is arranged in front of the fuel tank in the length direction of the all-terrain vehicle.

27. The all-terrain vehicle of claim 18, wherein the travel members comprises a left front wheel and a right front wheel, and the transmission system comprises a front axle assembly arranged at the front end of the frame, the front axle assembly comprises two output ends, which are respectively connected to the left front wheel and the right front wheel; the frame comprises a front axle mounting bracket surrounding the front axle assembly, wherein the front axle mounting bracket comprises a first mounting portion and a second mounting portion, the front axle mounting bracket is connected to the front axle assembly through the first mounting portion and the second mounting portion, the first mounting portion is positioned behind the second mounting portion in the length direction of the all-terrain vehicle, and the connection direction between the second mounting portion and the front axle assembly is substantially parallel to the height direction of the all-terrain vehicle.

28. The all-terrain vehicle of claim 27, wherein the second mounting portion is a shaft hole that runs through the front axle mounting bracket along the height direction of the all-terrain vehicle, and the axis direction of the shaft hole is the connection direction between the first mounting portion and the front axle assembly; the first mounting portion is a sheet metal, the first mounting portion has an end face substantially perpendicular to the width direction of the all-terrain vehicle, and the front axle assembly abuts against the end face of the first mounting portion.

29. The all-terrain vehicle of claim 27, wherein the second mounting portion is a through hole, and the axis of the through hole is parallel to the height direction of the all-terrain vehicle.

30. The all-terrain vehicle of claim 27, wherein the frame further comprises a movable connector at least partially arranged above the front axle assembly, and the front axle assembly is connected to the front axle mounting bracket through the movable connector; the transmission system further comprises a left half shaft connected to the front axle assembly, a transmission center plane is defined as being perpendicular to the length direction of the all-terrain vehicle and passing through the connection point between the front axle assembly and the left half shaft, when viewed from the width direction of the all-terrain vehicle, the movable connector is at least partially positioned in front of the transmission center plane.

31. The all-terrain vehicle of claim 18, wherein a power train at least partially mounted on the rear frame, the power train comprises at least an engine, a transmission, an auxiliary drive system, and a speed reducer, the transmission and the auxiliary drive system are respectively arranged on the left and right sides of the engine, and the transmission and the auxiliary drive system at two ends are driven by the crankshaft of the engine, the speed reducer is arranged behind the engine and is connected to the engine in a transmission mode; the engine comprises an intake port and an exhaust port, wherein the intake port is oriented towards the front of the all-terrain vehicle and the exhaust port is oriented towards the rear of the all-terrain vehicle; the power train further comprises a turbocharger in fluid communication with the exhaust port, wherein the turbocharger is at least partially arranged between the engine and the speed reducer.

32. The all-terrain vehicle of claim 31, wherein the power train further comprises an air filter and a muffler, when viewed from the width direction of the all-terrain vehicle, the air filter is at least partially positioned in front of the engine, a distance extending along the length direction of the all-terrain vehicle from the front-most end of the air filter to the rear-most end of the muffler is defined as a power train layout length; the power train is connected to the rear frame by means of several hanging members, and a maximum interval between the hanging members along the length direction of the all-terrain vehicle is defined as a power train mounting length, a ratio of the power train layout length to the power train mounting length is in the range from 1.3 to 1.9.

33. The all-terrain vehicle of claim 31, wherein the power train further comprises an inter cooler at least partially positioned above the engine.

34. An all-terrain vehicle comprising
a frame comprising a rear frame arranged on the rear of the frame;
a vehicle body cover arranged on the frame;
a prime mover system supported by the frame;
a transmission system at least partially connected to the prime mover system;
travel members at least partially connected to the transmission system;
a cooling system at least partially connected to the prime mover system;
a vehicle door assembly connected to the frame;
wherein the cooling system is supported by the rear frame and comprises a cooling module at least partially connected to the prime mover system and an air-guiding mechanism for guiding air to the cooling module, the air-guiding mechanism comprises an air-guiding housing and air intake members positioned on two sides of the air-guiding housing, when viewed from a front side, the vehicle door assembly is positioned between the two air intake members positioned on two sides.

35. The all-terrain vehicle of claim 34, wherein the vehicle door assembly is in front of the air intake member in the length direction of the all-terrain vehicle.

36. The all-terrain vehicle of claim 34, wherein the air intake member has an air intake port defining an intake port extension line, a longitudinal plane is defined as being perpendicular to the width direction of the all-terrain vehicle, a reference plane is defined as being perpendicular to the height direction of the all-terrain vehicle, an angle defined between the intake port extension line and the longitudinal plane is in the range from 30 degrees to 70 degrees, an angle defined between the intake port extension line and the reference plane is in the range from 0 degree to 30 degrees.

37. The all-terrain vehicle of claim 36, wherein the air intake port comprises an upper air intake positioned at the upper of the air intake, the transmission system further comprises a transmission and a transmission intake pipe, one end of the transmission intake pipe is connected to the upper air intake port, and the other end of the transmission intake pipe is connected to the transmission, the prime mover system further comprises an air filter and an air filter intake pipe, one end of the air filter intake pipe is connected to the upper air intake port, and the other end of the air filter intake pipe is connected to the air filter.

38. The all-terrain vehicle of claim 36, wherein the air intake port comprises an upper air intake positioned at the upper of the air intake, the cooling system further comprises a coolant reservoir, with a portion of the coolant reservoir connected to the prime mover system, and the other portion of the coolant reservoir connected to the cooling module; the coolant reservoir is arranged behind the upper air intake port in the length direction of the all-terrain vehicle.

39. The all-terrain vehicle of claim 34, wherein the transmission system further comprises a transmission, the transmission comprises a transmission exhaust port, the transmission exhaust port is oriented towards the rear in the length direction of the all-terrain vehicle.

40. The all-terrain vehicle of claim 34, wherein the air-guiding mechanism further comprises an auxiliary air intake member positioned at the front end of the air-guiding housing, the all-terrain vehicle further comprises a seat assembly, and the auxiliary air intake member partially overlaps with the seat assembly in the length direction of the all-terrain vehicle; the air-guiding housing, the air intake member, and the auxiliary air intake member are integrally formed.

41. The all-terrain vehicle of claim 40, wherein the top of the seat assembly is lower than the bottom of the auxiliary air intake member in the height direction of the all-terrain vehicle, the top of the seat assembly is higher than the bottom of the auxiliary air intake member, and the top of the seat assembly is lower than the top of the auxiliary air intake member.

42. The all-terrain vehicle of claim 41, wherein a transverse plane is defined as being perpendicular to the length direction of the all-terrain vehicle, a projection of the air-guiding mechanism projected along the length direction of the all-terrain vehicle on the transverse plane is defined as an air-guiding mechanism projection, and a projection of the auxiliary air intake member projected on the transverse plane along the length direction of the all-terrain vehicle is defined as an auxiliary air intake member projection, a ratio of a dimension of the auxiliary air intake member projection along the width direction of the all-terrain vehicle to a dimension of the air-guiding mechanism projection along the width direction of the all-terrain vehicle is in the range from 0.2 to 0.4.

43. The all-terrain vehicle of claim 36, wherein the cooling system comprises a cooling module connected to the rear frame, the cooling module comprises an inter cooler, a radiator, and a fan device, the fan device is positioned on one side of the radiator, and the inter cooler is positioned on the other side of the radiator.

44. The all-terrain vehicle of claim 34, wherein the air-guiding housing overlaps at least partially with the power system in the height direction of the all-terrain vehicle, a ratio of a width of the air-guiding mechanism to a width of the air-guiding housing is in the range from 1.1 to 2.2.

45. The all-terrain vehicle of claim 34, wherein the bottom of the air-guiding housing is inclined, and a extension plane of the bottom of the air-guiding housing is defined as a bottom extension surface. a reference plane is defined as being perpendicular to the height direction of the all-terrain vehicle, an angle defined between the bottom extension surface and the reference plane is in the range from 10 degree to 30 degrees, and a detachable cover plate is arranged on the air-guiding housing.

46. The all-terrain vehicle of claim 34, wherein a power train at least partially mounted on the rear frame, the power train comprises at least an engine, a transmission, an auxiliary drive system, and a speed reducer, the transmission and the auxiliary drive system are respectively arranged on the left and right sides of the engine, and the transmission and the auxiliary drive system at two ends are driven by the crankshaft of the engine, the speed reducer is arranged behind the engine and is connected to the engine in a transmission mode; the engine comprises an intake port and an exhaust port, wherein the intake port is oriented towards the front of the all-terrain vehicle and the exhaust port is oriented towards the rear of the all-terrain vehicle; the power train further comprises a turbocharger in fluid communication with the exhaust port, wherein the turbocharger is at least partially arranged between the engine and the speed reducer.

47. The all-terrain vehicle of claim 46, wherein the power train further comprises an inter cooler at least partially positioned above the engine.

48. The all-terrain vehicle of claim 47, wherein a preset space for air circulation is defined in front of the inter cooler, and a depth of the preset space extending along the length direction of the all-terrain vehicle is in the range from 128 to 284.

49. The all-terrain vehicle of claim 46, wherein the auxiliary drive system comprises a first motor and a second motor, the first motor is connected to the crankshaft of the engine, and the first motor always maintains a generating state when the engine is working, the second motor is connected to the first motor in a transmission mode; when the power consumption of the all-terrain vehicle is within a preset threshold range, the second motor switches to the power generation state.

50. The all-terrain vehicle of claim 49, wherein the first motor is a permanent magnet motor, and the second motor is an excitation motor.

51. The all-terrain vehicle of claim 47, wherein the power train comprises an exhaust pipe, with two ends of the exhaust pipe respectively connected to the turbocharger and the muffler, a ratio of the length of the exhaust pipe extending along the length direction of the all-terrain vehicle to the power train layout length is in the range from 0.3 to 0.5.

52. The all-terrain vehicle of claim 46, wherein the frame and the vehicle body cover cooperatively define a cockpit, the all-terrain vehicle further comprises a fuel tank, and when viewed from the width direction of the all-terrain vehicle, the fuel tank is positioned at the front of the cockpit along the length direction of the all-terrain vehicle.

53. The all-terrain vehicle of claim 46, wherein the cooling system comprises air intake members arranged on two sides of the all-terrain vehicle, the air intake member defines an upper air intake port, and the transmission is in fluid communication with the upper air intake port by means of a transmission intake pipe, the power train further comprises an air filter, and the air filter is in fluid communication with the upper air intake port by means of an air filter intake pipe.

54. The all-terrain vehicle of claim 53, wherein the transmission comprises a transmission exhaust port, the transmission exhaust port is oriented towards the rear in the length direction of the all-terrain vehicle.
